# EUROPEAN PATENT SPECIFICATION

(11) **EP 2 787 096 B1**
(45) Date of publication and mention of the grant of the patent: **12.10.2016**
(21) Application number: 12852604.3
(22) Date of filing: 27.11.2012
(51) Int. Cl.: C22C 38/00, C22C 38/50, C22C 38/60, C21D 9/46, C22C 38/02, C22C 38/04, C22C 38/06, C22C 38/42, C22C 38/44, C22C 38/46, C22C 38/48, B23K 35/00, C21D 9/50

(54) **FERRITIC STAINLESS STEEL**
FERRITISCHER EDELSTAHL
ACIER INOXYDABLE À BASE DE FERRITE

(30) Priority: 30.11.2011 JP 2011261799
(43) Date of publication of application: 08.10.2014
(73) Proprietor: JFE Steel Corporation, Tokyo, 100-0011 (JP)
(72) Inventor: FUKUDA, Kunio, Tokyo 100-0011 (JP); SAMUKAWA, Takashi, Tokyo 100-0011 (JP); OTA, Hiroki, Tokyo 100-0011 (JP); ISHII, Tomohiro, Tokyo 100-0011 (JP); OGATA, Hiroyuki, Tokyo 100-0011 (JP)
(74) Representative: Grünecker Patent- und Rechtsanwälte PartG mbB
(86) International application number: PCT/JP2012/007593
(87) International publication number: WO 2013/080518

(56) References cited:
- EP-A1- 2 787 096
- WO-A1-2014/050011
- JP-A- S63 235 450
- JP-A- S63 235 450
- JP-A- 2005 089 850
- JP-A- 2005 089 850
- JP-A- 2009 012 070
- JP-A- 2009 012 070
- JP-A- 2011 173 124
- JP-A- 2011 173 124
- "AK STEEL 439 ULTRA FORM", ALLOY DIGEST,, 1 March 2003 (2003-03-01), pages 11-12, XP008171732,
- 'AK STEEL 439 ULTRA FORM' ALLOY DIGEST March 2003, pages 11 - 12, XP008171732
- KEIICHI YOSHIOKA ET AL.: 'Kyokuteitan - Chisso 17% Cr Ferrite-kei Stainless Hagane no Yosetsubu no Jinsei Oyobi Taishokusei ni Oyobosu Gokin Genso no Eikyo' JOURNAL OF THE IRON & STEEL INSTITUTE OF JAPAN vol. 64, no. 4, 1978, page S395, XP008171482
- JUN'ICHI HAMADA ET AL.: 'Properties Of Welded Joint Between Ferritic Stainless Steel With High Corrosion Resistance And Other Stainless Steels' CURRENT ADVANCES IN MATERIALS AND PROCESSES vol. 12, no. 6, 01 September 1999, page 1267, XP008171647

## Description

### [Technical Field]

The present invention relates to ferritic stainless steel with corrosion resistance, in particular, excellent corrosion resistance in a weld zone which is formed when the ferritic stainless steel is welded together with austenitic stainless steel, and with excellent surface quality.

### [Background Art]

Among stainless steels, SUS304 (18%Cr-8%Ni) (Japanese Industrial Standard, JIS G 4305) which is a kind of austenitic stainless steel is widely used because of its good corrosion resistance. However, this kind of steel is expensive because a large amount of Ni is contained therein. Therefore, the stainless steel according to Patent Literature 1 was developed as a steel grade having a good corrosion resistance equivalent to that of SUS304.

Patent Literature 1 discloses a ferritic stainless steel having a chemical composition containing, by mass%, C: 0.03% or less, Si: 1.0% or less, Mn: 0.5% or less, P: 0.04% or less, S: 0.02% or less, Al: 0.1% or less, Cr: 20.5% or more and 22.5% or less, Cu: 0.3% or more and 0.8% or less, Ni: 1.0% or less, Ti: 4×(C%+N%) or more and 0.35% or less, Nb: 0.01% or less, N: 0.03% or less, C+N: 0.05% or less, and the balance being Fe and inevitable impurities.

In addition, since ferritic stainless steels of JIS-SUS444, JIS-SUS430J1L, and the like have characteristics such as having lower stress corrosion cracking sensitivity than austenitic stainless steels and not containing Ni whose price varies largely, these stainless steels are widely used as materials for exhaust system parts of automobiles and water tanks and building materials.

However, since ferritic stainless steels generally have less formability, in particular ductility, than austenitic stainless steels, austenitic stainless steels are used as materials for parts which are too difficult to form from ferritic stainless steels. Therefore, there are many cases where one component is formed by connecting parts made of austenitic stainless steels and that of ferritic stainless steels. In these cases, parts are joined together by performing welding in most cases, and, among welding methods, TIG welding (Tungsten Inert Gas welding) is mainly used, and good corrosion resistance is required for the weld zone as well as the base metal.

### [Citation List]

### [Patent Literature]

[PTL 1] Japanese Patent No. 4396676
[PTL 2] Japanese Patent No. 2842787

JP2011173124 describes a welded ferritic stainless steel having excellent corrosion resistance wherein the ferritic stainless steel contains (in %mass) carbon (0.02 or less), silicon (3 or less), manganese (1 or less), phosphorus (0.04 or less), sulfur (0.03 or less), nickel (4 or less), chromium (16-26), molybdenum (2 or less), nitrogen (0.025 or less) and niobium (0.05-0.6), titanium (0.05-0.4) and/or aluminum (0.02-0.3) and remainder of iron and unavoidable impurities

### [Summary of Invention]

### [Technical Problem]

The ferritic stainless steel according to Paten Literature 1 has good corrosion resistance in a weld zone in the case where steels of the same grade are welded. However, there is a problem in that the corrosion resistance in a weld zone is less than that of base metals in the case where the ferritic stainless steel is welded together with another kind of steel such as SUS304 by performing TIG welding.
This is because, since C or N in the steels combines with Cr in heat cycles at the welding so that Cr-carbides such as Cr₂₃C₆ or Cr-nitrides such as CrN₂ precipitate at the grain boundaries and so called sensitization occurs due to a chromium depletion layer, in which Cr content is less than in the base metal, being formed at the grain boundaries, which results in a decrease in corrosion resistance at the grain boundaries.

In order to prevent a decrease in corrosion resistance in a weld zone described above, a method is used in which the formation of Cr-carbides and Cr-nitrides are prevented by reducing C and N in steel, adding an appropriate amount of Ti, and fixing C and N as a titanium carbonitrides. By this method, the weld zone, which is formed by performing TIG welding on sheets of the same ferritic stainless steel according to Patent Literature 1, has good corrosion resistance.

However, since SUS304 or the like has a C content of 0.04% to 0.05% which is much more than that of this ferritic stainless steel sheet whose C content is about 0.01%, in order to similarly prevent sensitization by adding Ti in the case where this ferritic stainless steel sheet is welded together with a high carbon stainless steel such as SUS304, it is necessary to increase Ti content to about 1.0%.

However, in the case where the Ti content of ferritic stainless steel is increased to about 1.0%, there is a case where Ti and N in molten steel react with each other to form and precipitate TiN in the course of solidification. This TiN has low ductility at a high temperature and causes surface defects in hot rolling, which results in a decrease in surface quality. Since the defects formed as described above are too deep to be eliminated during annealing of a hot-rolled sheet and acid pickling and further during cold rolling, annealing of a cold-rolled sheet and acid pickling, the defects become surface defects called stringers caused by titanium nitrides, unless performing a treatment such as surface grinding in which a thick layer is shaved off the surface of the hot-rolled, annealed and pickled steel sheet, which results in a significant decrease in the surface quality of the cold-rolled, annealed and pickled steel sheet.

In addition, it is generally recommended to perform TIG welding under conditions in which the face and back sides of a steel sheet are shielded with an inert gas so that thin oxide layers called temper color are not formed at the weld zone. However, in a practical process, this gas shield is not sufficiently effective, and there is also a problem in that sensitization described above is promoted by N in the air being mixed in.

In addition, there is also a problem in that adding expensive Ti in a large amount decreases the advantage of the steel grade which does not use expensive Ni.

The present invention has been completed in view of the situation described above, and an object of the present invention is to provide a ferritic stainless steel with excellent corrosion resistance in a weld zone which is obtained even when the ferritic stainless steel is welded together with an austenitic stainless steel and to provide a ferritic stainless steel with excellent surface quality.

### [Solution to Problem]

The present inventors, in order to solve the problems described above, conducted close examinations and investigations regarding the influence of the chemical composition of steel on the corrosion resistance of a base metal and a weld zone and on the occurrence behavior of surface defects (a scab, a pin hole, a linear scab, a shape defect such as stringers caused by titanium nitrides, and a color defect of a white stripe type) of a steel sheet, and, as a result, obtained the following knowledge.
(1) Sensitization can be prevented to some extent by making the microstructure of a weld zone, which is formed by welding a ferritic stainless steel and an austenitic stainless steel, a martensite phase, in which the solid solubility limits of C and N are large, by adjusting the contents of chemical elements promoting the formation of a ferritic phase, which are so-called ferritic former elements.
(2) When adding a very small amount of Nb, the precipitates of Nb in combination with N are formed at a temperature higher than a temperature at which Ti nitrides are precipitated and these precipitates become nucleation sites of Ti carbonitrides in a cooling process thereafter to form carbonitrides in combination with Ti, which results in an effect of preventing sensitization by Ti.
(3) There is little side effect which increases the crystallization temperature of a steel sheet in the case where a very small amount of Nb is added, and an inexpensive rapid annealing and pickling method using a line for manufacturing carbon steel such as that disclosed in Patent Literature 2 can be applied.
(4) Even if N in air is mixed in a weld zone due to an incomplete gas shield, sensitization can be prevented due to the formation of AlN in the weld zone by adding Al. Sensitization can also be prevented due to the formation of the compounds of Sb and N in a weld zone by adding Sb.
(5) A stringer flaw caused by titanium nitrides is mainly caused by TiN which grows at the columnar grain boundaries, because TiN which is present in the part of columnar grains grows to a large size. A stringer flaw caused by titanium nitrides is hardly caused by TiN in other parts than that in the part of columnar grains, because it is highly probable that this kind of TiN is removed in normal post-processes such as acid pickling of a hot-rolled sheet and acid pickling of a cold-rolled sheet.
(6) In the case where Si content is large, since there is a decrease in the solubility product of Ti and N in molten steel, the precipitation of Ti carbonitrides is promoted at a temperature higher than that at which columnar grains are formed. As a result, since there is a decrease in the amount of N in steel, it is difficult for TiN to precipitate at the columnar grain boundaries when columnar grains grow afterwards. Therefore, in the case where Si content is large, even if Ti content is large to some extent, the precipitation of TiN at the columnar grain boundaries, which causes a stringer flaw caused by titanium nitrides, can be suppressed.

From the findings described above, the knowledge was obtained that a ferritic stainless steel, which has an excellent corrosion resistance in a weld zone, which does not need surface grinding at the stage of a hot-rolled, annealed and pickled steel sheet, which makes a cold-rolled, annealed and pickled steel sheet having excellent surface quality, and which is less expensive compared to austenitic stainless steels containing Ni, can be achieved.

The present invention has been completed on the basis of the knowledge described above and the subject matter of the present invention is as follows.

[1] Ferritic stainless steel with excellent corrosion resistance in a weld zone and surface quality, the steel having a chemical composition containing, by mass%, C: 0.003% or more and 0.012% or less, Si: 0.30% or more and 0.60% or less, Mn: 0.10% or more and 0.35% or less, P: 0.040% or less, S: 0.020% or less, Cr: 17.0% or more and 19.0% or less, Ni: more than 0.10% and 0.30% or less, Ti: 0.10% or more and 0.40% or less, Nb: 0.005% or more and less than 0.050%, Mo: 0.20% or less, N: 0.005% or more and 0.015% or less, Cu: 0.3% or more and 0.5% or less, Mg: less than 0.0005%, and the balance being Fe and inevitable impurities.
[2] The ferritic stainless steel with excellent corrosion resistance in a weld zone and surface quality according to item [1], the steel having the chemical composition further containing, by mass%, Al: 0.01% or more and 0.5% or less.
[3] The ferritic stainless steel with excellent corrosion resistance in a weld zone and surface quality according to item [1] or [2], the steel having the chemical composition further containing, by mass%, Sb: 0.05% or more and 0.30% or less.
[4] The ferritic stainless steel with excellent corrosion resistance in a weld zone and surface quality according to any one of items [1] to [3], the steel having the chemical composition further containing, by mass%, one or two of Zr: 0.01% or more and 0.60% or less and V: 0.01% or more and 0.50% or less.

### [Advantageous Effects of Invention]

The ferritic stainless steel according to the present invention can be suitably used as materials for kitchen instruments, architectural interiors, industrial machineries, and automobile parts, because the ferritic stainless steel has excellent corrosion resistance in a weld zone and surface quality when the ferritic stainless steel is welded even together with an austenitic stainless steel.

### [Description of Embodiments]

The limitations on the factors constituting the present invention will be described hereafter.

### 1. Regarding chemical composition

First, the reason for the limitations on the chemical composition of the steel according to the present invention will be described. Here, % used when describing a chemical composition always means mass%.

### C: 0.003% or more and 0.012% or less

It is preferable that C content be as small as possible, because C tends to combine with Cr to form Cr carbides, and because intergranular corrosion is caused by Cr carbides which are formed in a heat affected zone when welding is performed. Therefore, the C content is set to be 0.012% or less. On the other hand, since a long time is necessary for smelting in the case where the C content is excessively small, the C content is set to be 0.003% or more and 0.012% or less, preferably 0.003% or more and 0.010% or less.

### Si: 0.30% or more and 0.60% or less

Si is a chemical element which is important in the present invention. In the case where Si is added in an appropriate mount, there is a decrease in the solubility product of Ti and N and therefore the precipitation of Ti carbonitrides is promoted at a temperature higher than that at which columnar grains are formed. As a result, since there is a decrease in the amount of N in steel, it is difficult for TiN to precipitate at the columnar grain boundaries when columnar grains grow afterwards. In the case of the chemical composition according to the present invention, by adding Si in an amount of 0.30% or more, it is possible to suppress the precipitate of TiN at the columnar grain boundaries, which causes a stringer flaw caused by titanium nitrides. However, in the case where the Si content is more than 0.60%, there is a decrease in productivity, because there is a decrease in the pickling performance of a cold-rolled sheet in a rapid pickling method which is used in an apparatus for manufacturing ordinary steel described above. In addition, in the case where the Si content is excessively large, there is a decrease in formability due to the excessive hardness of the material. Therefore, the Si content is set to be 0.30% or more and 0.60% or less, preferably 0.40% or more and 0.50% or less.

### Mn: 0.10% or more and 0.35% or less

Since Mn is effective for deoxidation, the Mn content is set to be 0.10% or more. In addition, since Mn is a chemical element promoting the formation of an austenite phase (an austenite former element), Mn promotes the formation of a martensite phase in a weld zone which is formed when a ferritic stainless steel is welded together with an austenitic stainless steel (hereinafter, called the weld zone of steels of different grades). However, in the case where the Mn content is excessively large, Mn combines with S in the steel to form MnS which is a soluble sulfide, which results in a decrease in corrosion resistance. Therefore, the Mn content is set to be 0.10% or more and 0.35% or less, preferably 0.10% or more and 0.25% or less.

### P: 0.040% or less

P is a chemical element which has a negative effect on corrosion resistance, and, moreover, which decreases hot formability. In particular, these tendencies become significant in the case where the P content is more than 0.040%. Therefore, the P content is set to be 0.040% or less, preferably 0.030% or less.

### S: 0.020% or less

S is a chemical element which has a negative effect on corrosion resistance. In particular, in the case where S is present together with Mn, S becomes a source of pitting as a result of forming MnS, which results in a decrease in corrosion resistance. This negative effect becomes significant in the case where S content is more than 0.020%. Therefore, the S content is set to be 0.020% or less, preferably 0.010% or less, more preferably 0.006% or less.

### Cr: 17.0% or more and 19.0% or less

Cr is a chemical element which is essential for increasing the corrosion resistance of a base metal by forming a passivation film on the surface of a stainless steel. Although Cr content of 17.0% or more is necessary in order to achieve good corrosion resistance, in the case where the Cr content is more than 19.0%, a decrease in corrosion resistance cannot be prevented in the weld zone of steels of different grades with SUS304, because a martensite phase cannot be formed in the weld zone. Therefore, the Cr content is set to be 17.0% or more and 19.0% or less, preferably 17.5% or more and 18.5% or less.

### Ni: more than 0.10% and 0.30% or less

Ni is a chemical element which contributes to improving crevice corrosion resistance. Moreover, since Ni is a chemical element promoting the formation of an austenite phase (an austenite former element) like Mn, Ni promotes the formation of a martensite phase in the weld zone of steels of different grades. However, there is an increase in SCC sensitivity in the case where Ni content is more than 0.30%, and Ni is an expensive chemical element. Therefore, the Ni content is set to be more than 0.10% and 0.30% or less, preferably 0.20% or more and 0.30% or less.

### Nb: 0.005% or more and less than 0.050%

The addition of a small amount of Nb is also one of the important factors for the present invention. Nb forms carbonitrides more than Cr or Ti. In particular, in the case of the weld zone of steels of different grades, in weld metal and a heat affected zone, the formation of Nb carbonitrides begins at a temperature higher than the temperature at which Ti carbonitrides are formed. Although the reason is not clear, in a cooling process thereafter, a small amount of Nb carbonitrides becomes nucleation sites of Ti carbonitrides. That is to say, the addition of a small amount of Nb promotes the formation of Ti carbonitrides. Therefore, the capability of Ti for fixing C and N in weld metal and a heat affected zone becomes stronger than that in the case where Nb is not contained. Therefore, the Nb content is set to be 0.005% or more.

On the other hand, in the case where the Nb content is 0.050% or more, since there is an increase in the recrystallization temperature of a cold-rolled steel sheet, it is necessary to anneal the steel sheet at a temperature higher than that in the case where Nb is not added in order to achieve good mechanical properties. Therefore, there is an increase in the thickness of an oxide layer, which is formed when finishing annealing is performed, in comparison to that in the case where Nb is not added. Therefore, there is a decrease in productivity due to a decrease in the pickling performance of a cold-rolled steel sheet in a rapid pickling method which is used in an apparatus for manufacturing carbon steel described above. Therefore, the Nb content is set to be 0.005% or more and less than 0.050%, preferably 0.01% or more and less than 0.050%.

### Ti: 0.10% or more and 0.40% or less

It is necessary to add Ti in an amount of 0.10% or more in order to achieve good corrosion resistance in the weld zone of steels of different grades which is formed when a ferritic stainless steel is welded together with an austenitic stainless steel (in order to prevent sensitization). However, in the case where the Ti content is more than 0.40%, since there is an increase in the amount of stringer flaws caused by titanium nitrides due to the formation of TiN at the columnar grain boundaries, it is necessary to grind the surface of a hot-rolled, annealed and pickled steel sheet by using a grinder in order to achieve good surface quality. Therefore, the Ti content is set to be 0.10% or more and 0.40% or less, preferably 0.20% or more and 0.40% or less.

### Mo: 0.20% or less

Mo is a chemical element which strengthens a passivation film and significantly increases corrosion resistance, and these effects are realized in the case where the Mo content is 0.01% or more. However, since Mo is a chemical element promoting the formation of a ferrite phase, which is a so-called ferrite former element, a martensite phase is not formed in the weld zone of steels of different grades which is formed when a ferritic stainless steel is welded together with an austenitic stainless steel, in the case where the Mo content is more than 0.20%, and a ferrite phase containing a small amount of C and N in the form of solid solution is formed, which results in sensitization not being prevented. Therefore, the Mo content is set to be 0.20% or less. In addition, since Mo causes a decrease in the toughness of a hot-rolled steel sheet, it is preferable that the Mo content be 0.10% or less.

### N: 0.005% or more and 0.015% or less

N tends to combine with Cr to form Cr nitrides. It is preferable that the N content be as small as possible, because Cr nitrides cause intergranular corrosion in the case where Cr nitrides are formed in the weld zone of steels of different grades and in a heat affected zone when welding is performed. In addition, it is preferable that N content be as small as possible, because N is a chemical element which causes stringer flaws caused by titanium nitrides. However, since smelting takes a long time in the case where the N content is excessively small, the N content is set to be 0.005% or more and 0.015% or less, preferably 0.005% or more and 0.012% or less.

### Cu: 0.3% or more and 0.5% or less

Cu is a chemical element which increases corrosion resistance, in particular in the case where a steel sheet is placed in an aqueous solution or covered with weakly acidic water drops. This is presumed to be because Cu suppresses the dissolution of the base metal of the steel sheet by first dissolving at a certain electrochemical potential in the aqueous solution or the water drops and then by covering the surface of the base metal. On the other hand, in the case where Cu content is more than 0.5%, there is a decrease in hot formability and surface defects are caused by the formation of an oxide having a low melting temperature, which is called red scale, on the surface of a hot-rolled slab due to Cu when hot rolling is performed. Therefore, the Cu content is set to be 0.3% or more and 0.5% or less, preferably 0.3% or more and 0.4% or less.

### Mg: less than 0.0005%

Mg is an impurity which is mixed in mainly from the bricks of a converter furnace. Since Mg becomes the source of various kinds of inclusion and nucleation sites of other kinds of inclusion even if the amount of Mg which is mixed in is small, and since Mg is less likely to reform into a solid solution even when a treatment such as annealing is performed, Mg decreases the surface quality of a hot-rolled, annealed and pickled steel sheet and a cold-rolled, annealed and pickled steel sheet. Therefore, the Mg content is set to be less than 0.0005%, preferably less than 0.0003%.

The basic chemical composition according to the present invention is as described above and the balance consists of Fe and inevitable impurities. Al and Sb may be further added as selective chemical elements from the viewpoint of forming a gas shield for TIG welding and preventing the sensitization of the weld zone of steels of different grades. Moreover, Zr and V may be added as selective chemical elements in order to improve the corrosion resistance of the weld zone of steels of different grades. Here, as an example of inevitable impurities, Ca: 0.0020% or less is acceptable.

### Al: 0.01% or more and 0.5% or less

The addition of Al is necessary in the case where a gas shield for TIG welding is not sufficiently effective. Generally, the face and back sides of a steel sheet are shielded with gas when TIG welding is performed as described above. However, in the case where the shape of the weld zone of steels of different grades is complicated, since the gas shield is not sufficiently effective, N in air may be mixed in the weld metal, so that the amount of N is more than the solid solubility limit of a martensite phase, which results in such a case where sensitization is not completely prevented only by Ti which is added in advance. In this case, it is effective to add Al in advance in order to prevent sensitization. This is because Al fixes N which is mixed in the weld metal and forms AlN as a result of combining with N. This effect can be realized in the case where the Al content is 0.01% or more. However, in the case where the Al content is excessively large, non-metal inclusions are formed at the slab stage, which results in a decrease in surface quality, and which results in a decrease in the toughness of a hot-rolled sheet. Therefore, in the case where Al is added, it is preferable that the Al content be 0.01% or more and 0.5% or less, preferably 0.1% or more and 0.5% or less, more preferably 0.15% or more and 0.25% or less.

### Sb: 0.05% or more and 0.30% or less

It is better to add Sb in the case where a component has a complicated shape, because Sb is a chemical element that is, like Al, effective for fixing N which is mixed in from air in the case where a gas shield for TIG welding is not sufficiently effective. However, in the case where Sb content is excessively large, non-metal inclusions are formed at the slab stage, which results in a decrease in the surface quality, and which results in a decrease in the toughness of a hot-rolled sheet. Therefore, in the case where Sb is added, it is preferable that the Sb content be 0.05% or more and 0.30% or less, more preferably 0.05% or more and 0.15% or less.

### Zr: 0.01% or more and 0.60% or less

Zr is a chemical element which is preferably added in consideration of the corrosion resistance of a weld zone, because Zr increases corrosion resistance in the weld zone of steels of the same grade and in the weld zone of steels of different grades by forming, like Ti, carbonitrides more preferentially than Cr. However, Zr is more expensive than Ti and forms intermetallic compounds in the case where Zr content is excessively large, which results in a decrease in the toughness of a hot-rolled sheet. Therefore, in the case where Zr is added, it is preferable that the Zr content be 0.01% or more and 0.60% or less, more preferably 0.1% or more and 0.35% or less.

### V: 0.01% or more and 0.50% or less

V is also a chemical element which is effective for increasing corrosion resistance in the weld zone of steels of the same grade and in the weld zone of steels of different grades by forming, like Ti, carbonitrides more preferentially than Cr. This effect can be realized in the case where the V content is 0.01% or more. However, in the case where the V content is more than 0.50%, there is a decrease in mechanical properties. Therefore, in the case where V is contained, it is preferable that the V content be 0.01% or more and 0.50% or less, more preferably 0.02% or more and 0.05% or less.

### 2. Regarding manufacturing conditions

Subsequently, a suitable method for manufacturing the steel according to the present invention will be described. Steel having the chemical composition described above is smelted using a well-known method such as one using a converter furnace, an electric furnace, or a vacuum melting furnace, and the steel is made into a steel material (slab) using a continuous casting method or an ingot casting and slabbing process. This steel material is heated at a temperature of 1100°C to 1250°C for a duration of 1 to 24 hours and hot-rolled into a hot-rolled sheet, or hot-roled into a hot-rolled sheet without undergoing such heating.

The hot-rolled steel sheet is normally subjected to annealing of a hot-rolled sheet at a temperature of 800°C to 1100°C for a duration of 1 to 10 minutes. However, annealing of a hot-rolled sheet may be omitted depending on use application. Then, after being subjected to pickling of a hot-rolled sheet, the hot-rolled sheet is cold-rolled into a cold-rolled sheet, and the cold-rolled sheet is made into a product sheet by performing finishing annealing. It is preferable that cold rolling be performed with a rolling reduction ratio in thickness of cold rolling of 50% or more in order to achieve good ductility, bending performance, and press forming performance and in order to perform shape leveling. It is preferable that recrystallization annealing of a cold-rolled steel sheet be performed at a temperature of 800°C to 950°C in the case of No. 2B finish in order to achieve good mechanical properties and pickling performance.

However, in the case of a functional product, it is most preferable that the product be manufactured in an inexpensive process using a rapid pickling method which uses an annealing and pickling line for carbon steel which utilizes a line for manufacturing carbon steel as described above, and, in this case, it is most preferable that the annealing temperature be 800°C to 900°C.

In addition, in the case of a material for a part of which luster is required more than usual, it is effective to perform finishing annealing using bright annealing. In addition, as described above, a treatment such as polishing may be performed after cold rolling and machining have been performed in order to achieve further better surface quality, although there is a disadvantage in cost.

### [EXAMPLE 1]

Ferritic stainless steels having chemical compositions of examples No. 1 through No. 8 and comparative examples No. 9 through No. 12 given in Table 1 were smelted using a small vacuum melting furnace having a capacity of 50 kg. These ingots were heated at a temperature of 1150°C in a furnace under an Ar gas purge and hot-rolled into hot-rolled sheets having a thickness of 3.5 mm.

Subsequently, these hot-rolled sheets were subjected to annealing of a hot-rolled sheet in air at a temperature of 950°C for a duration of 1 minute, and a surface treatment using shot blasting with glass beads. Then, descaling was performed using a pickling process in which the steel sheets were dipped in a sulfuric acid solution containing sulfuric acid at a concentration of 20 mass% at a temperature of 80°C for a duration of 120 seconds and then in a mixed acid solution containing nitric acid at a concentration of 15 mass% and hydrofluoric acid at a concentration of 3 mass% at a temperature of 55°C for a duration of 60 seconds.

Moreover, after the descaling was performed, the hot-rolled sheets were cold-rolled into cold-rolled steel sheets having a thickness of 1.0 mm, subjected to annealing in a furnace in air at a temperature of 900°C for a duration of 1 minute in order to obtain cold-rolled and annealed sheets. These cold-rolled and annealed sheets were subjected to electrolytic descaling three times in a solution containing Na₂SO₄ at a concentration of 20 mass% at a temperature of 80°C with a current of 3 Ampere/dm² for a duration of 10 seconds and descaling in a mixed acid solution containing nitric acid at a concentration of 5 mass% and hydrofluoric acid at a concentration of 3 mass% at a temperature of 55°C for a duration of 30 seconds in order to obtain cold-rolled, annealed and pickled sheets.

**[Table 1]**

| No. | Chemical Composition (mass%) | | | | | | | | | | | | | | | | | Note |
|---|---|---|---|---|---|---|---|---|---|---|---|---|---|---|---|---|---|---|
| | C | Si | Mn | P | S | Cr | Ni | Cu | Ti | Nb | Mo | N | Mg | Al | Sb | Zr | V | |
| 1 | 0.010 | 0.38 | 0.21 | 0.025 | 0.004 | 18.5 | 0.19 | 0.35 | 0.22 | 0.02 | 0.05 | 0.009 | 0.0002 | - | - | - | - | |
| 2 | 0.004 | 0.45 | 0.15 | 0.023 | 0.007 | 17.6 | 0.12 | 0.38 | 0.32 | 0.03 | 0.02 | 0.006 | 0.0003 | - | - | - | | |
| 3 | 0.012 | 0.50 | 0.20 | 0.020 | 0.002 | 18.6 | 0.21 | 0.42 | 0.28 | 0.04 | 0.07 | 0.012 | 0.0002 | - | - | - | - | |
| 4 | 0.007 | 0.55 | 0.18 | 0.021 | 0.003 | 17.3 | 0.25 | 0.45 | 0.18 | 0.04 | 0.08 | 0.010 | 0.0004 | - | - | - | - | Example |
| 5 | 0.003 | 0.32 | 0.13 | 0.023 | 0.005 | 18.2 | 0.18 | 0.39 | 0.29 | 0.02 | 0.10 | 0.006 | 0.0002 | 0.16 | - | - | - | |
| 6 | 0.008 | 0.39 | 0.15 | 0.025 | 0.002 | 17.9 | 0.15 | 0.33 | 0.34 | 0.01 | 0.09 | 0.012 | 0.0003 | 0.25 | - | - | 0.1 | |
| 7 | 0.009 | 0.55 | 0.25 | 0.019 | 0.003 | 18.2 | 0.27 | 0.50 | 0.25 | 0.03 | 0.09 | 0.011 | 0.0003 | - | 0.10 | - | - | |
| 8 | 0.006 | 0.41 | 0.29 | 0.028 | 0.002 | 17.3 | 0.26 | 0.33 | 0.15 | 0.02 | 0.06 | 0.007 | 0.0002 | 0.11 | 0.05 | - | - | |
| 9 | 0.010 | 0.43 | 0.20 | 0.027 | 0.006 | 16.1 | 0.16 | 0.42 | 0.28 | 0.02 | 0.11 | 0.009 | 0.0004 | - | - | - | - | Comparative Example |
| 10 | 0.004 | 0.42 | 0.23 | 0.028 | 0.001 | 19.5 | 0.24 | 0.30 | 0.35 | 0.02 | 0.15 | 0.007 | 0.0002 | 0.14 | - | - | - | |
| 11 | 0.011 | 0.44 | 0.22 | 0.021 | 0.002 | 18.1 | 0.22 | 0.34 | 0.08 | 0.02 | 0.12 | 0.014 | 0.0003 | - | - | - | - | |
| 12 | 0.005 | 0.25 | 0.24 | 0.018 | 0.003 | 18.3 | 0.16 | 0.33 | 0.29 | 0.06 | 0.09 | 0.008 | 0.0002 | 0.20 | - | - | 0.2 | |

| | | | | | | | | | | | | | | | | | | |
|---|---|---|---|---|---|---|---|---|---|---|---|---|---|---|---|---|---|---|
| Notation: Underlined value is out of range according to the present invention. | | | | | | | | | | | | | | | | | | |

Using these cold-rolled, annealed and pickled sheets, corrosion resistance was evaluated by performing a salt spray cyclic corrosion test (hereafter, CCT, at times). Subsequently, these cold-rolled, annealed and pickled sheets were polished to #600 finish and used for corrosion resistance evaluation by performing a CCT. Subsequently, using each of these polished sheets, a corrosion test on the weld zone of steels of the same grade formed by performing TIG welding was carried out. In this test, two pieces of sheets which were cut out of each sample material were welded by performing TIG welding, and the surface of the welded material was polished to #600 finish in order to investigate corrosion resistance by performing a CCT. The conditions of TIG welding will be described below. Welding current was controlled so that the width of the back bead was 3 mm or more. The surface on the back bead side was evaluated.

Welding potential: 10 Volts
Welding current: from 90 Ampere to 110 Ampere
Welding speed: 600 mm/min
Electrode: tungsten electrode of 1.6 mm
Shield gas: face bead side Ar 20 Liter/min, back bead side Ar 20 Liter /min

Moreover, using the same sample materials, a corrosion test on the weld zone of steels of different grades with SUS304 was carried out. In this test, a piece of sheet which was cut out of each sample material was welded with a sheet of SUS304 having a thickness of 1.0 mm by performing TIG welding, and the surface of the welded material was polished to #600 finish in order to investigate corrosion resistance by performing a CCT. The conditions of TIG welding were almost the same as those used for steels of the same grade described above.

In the salt spray cyclic corrosion test, a cycle in which spraying 5% NaCl aqueous solution at 35°C, 2 hrs, → drying at 60°C, 4 hrs, relative humidity: 20% to 30%, and → wetting at 40°C, 2 hrs, relative humidity: 95% or more were performed in this order was repeated for 15 cycles. The obtained results are given in Table 2.

**[Table 2]**

| No. | Surface Quality of Cold-Rolled, Annealed and Pickled Sheet | Corrosion Resistance by CCT of Cold-Rolled, Annealed and Pickled Sheet | Corrosion Resistance by CCT of Sheet Polished to #600 Finish | Corrosion Resistance by CCT of Weld Zone of Steels of Same Grade | Corrosion Resistance by CCT of Weld Zone of Steels of Different Grades | Others | Note |
|---|---|---|---|---|---|---|---|
| 1 | ⊙ | ⊙ | ⊙ | ⊙ | ⊙ | - | Example |
| 2 | ⊙ | ⊙ | ⊙ | ⊙ | ⊙ | - | |
| 3 | ⊙ | ⊙ | ⊙ | ⊙ | ⊙ | - | |
| 4 | ⊙ | ⊙ | ⊙ | ⊙ | ⊙ | - | |
| 5 | ⊙ | ⊙ | ⊙ | ⊙ | ⊙ | - | |
| 6 | ⊙ | ⊙ | ⊙ | ⊙ | ⊙ | - | |
| 7 | ⊙ | ⊙ | ⊙ | ⊙ | ⊙ | - | |
| 8 | ⊙ | ⊙ | ⊙ | ⊙ | ⊙ | - | |
| 9 | ⊙ | × | × | × | × | - | Comparative Example |
| 10 | ⊙ | ⊙ | ⊙ | ⊙ | × | - | |
| 11 | ⊙ | ○ | ○ | × | × | - | |
| 12 | Δ | Δ | ⊙ | ⊙ | ○ | Residual Scale, Decreased Ductility | |

Here, the judging criteria of the tests given in Table 2 will be described hereafter.
(1) Surface appearance after cold rolling, pickling and annealing had been performed: judging on the basis of the ratio of the length of a portion in which surface defects were found to the total length of the sample, ⊙ represents the case where a defect ratio is less than 5% (satisfactory: very good), ○ represents the case where a defect ratio is 5% or more and less than 10% (satisfactory: good), A represents the case where a defect ratio is 10% or more and less than 20% (unsatisfactory) and × represents the case where a defect ratio is 20% or more (unsatisfactory: very bad).
(2) The results of the CCT on cold-rolled, annealed and pickled sheets and the sheets polished to #600 finish:
   judging on the basis of an area in which rust occurred after 15 cycles of the test, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).
(3) The results of the test of the corrosion resistance on the weld zone of steels of the same grade: judging on the basis of a rust area ratio after 15 cycles of the CCT which was performed on the samples obtained by performing TIG butt welding on steels of the same grade and by eliminating the temper color of the weld zone with #600 emery paper, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).
(4) The results of the test of the corrosion resistance on the weld zone of steels of different grades with SUS304: judging on the basis of a rust area ratio after 15 cycles of the CCT which was performed on the samples obtained by performing TIG butt welding on each sample material and SUS304 and by eliminating the temper color of the weld zone with #600 emery paper, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).

The steels having chemical compositions No. 1 through No. 8 which were within the range according to the present invention were excellent in terms of corrosion resistance and surface quality in the cold-rolled, annealed and pickled sheet state, in the polished sheet state, in the weld zone of steels of the same grade and in the weld zone of the steels of different grades with SUS304.

On the other hand, comparative example No. 9 which had a small Cr content of 16.1% had a large rust area, which means that No. 9 was poor in terms of corrosion resistance.

In addition, comparative example No. 10 which had a large Cr content of 19.5% had a large rust area in the weld zone of steels of different grades, which means that No. 10 was poor in terms of corrosion resistance. It is thought to be because a martensite phase was not formed in the weld zone of steels of different grades due to the high content of Cr which is a ferrite former element.

In addition, comparative example No. 11 which had a small Ti content of 0.08% had large rust areas in the weld zone of steels of the same grade and in the weld zone of steels of different grades, which means that No. 11 was poor in terms of corrosion resistance.

Moreover, in the case of comparative example No. 12 which had Nb content which was more than the range according to the present invention, some scale residual was found on the surface of the base metal, which means that No. 12 was poor in terms of corrosion resistance after annealing of a cold-rolled sheet had been performed.

### [EXAMPLE 2]

Subsequently, steels having chemical compositions of examples No. 13 through No. 18 and comparative examples No. 19 through No. 22 given in Table 3 were smelted using a VOD (Vacuum Oxygen Decarburization) having a capacity of 150 ton and cast into slabs by performing continuous casting. These slabs were heated at a temperature of 1150°C and hot-rolled into hot-rolled steel sheets in a coiled state having a thickness of 3.5 mm. Then, these hot-rolled sheets were subjected to annealing in an atmosphere of a coke oven gas having an air ratio of 1.3 at a temperature of 950°C for a duration of 1 to 5 minutes, shot blasting on the surface with iron beads, descaling by pickling in which the steel sheets were dipped in a sulfuric acid solution containing sulfuric acid at a concentration of 20 mass% at a temperature of 80°C for a duration of 120 seconds and then in a mixed acid solution containing nitric acid at a concentration of 15 mass% and hydrofluoric acid at a concentration of 3 mass% at a temperature of 55°C for a duration of 60 seconds in order to obtain hot-rolled annealed and pickled sheets in the coiled state.

Moreover, the hot-rolled sheets were cold-rolled into cold-rolled sheets having a thickness of 1.0 mm, subjected to annealing in a furnace in an atmosphere of a coke oven gas having an air ratio of 1.3 at a temperature of 900°C for a duration of 2 minutes, electrolytic descaling three times in a solution containing Na₂SO₄ at a concentration of 20 mass% at a temperature of 80°C with a current of 3 Ampere /dm² for a duration of 10 seconds and descaling in a mixed acid solution containing nitric acid at a concentration of 5 mass% and hydrofluoric acid at a concentration of 3 mass% at a temperature of 55°C for a duration of 30 seconds in order to obtain cold-rolled, annealed and pickled steel sheets.

At this stage, the surface quality of the cold-rolled, annealed and pickled steel sheets obtained as described above was evaluated by a visual test.

**[Table 3]**

| No. | Chemical Composition (mass%) | | | | | | | | | | | | | | | | | Note |
|---|---|---|---|---|---|---|---|---|---|---|---|---|---|---|---|---|---|---|
| | C | Si | Mn | P | S | Cr | Ni | Cu | Ti | Nb | Mo | N | Mg | Al | Sb | Zr | V | |
| 13 | 0.009 | 0.40 | 0.22 | 0.027 | 0.003 | 18.7 | 0.16 | 0.37 | 0.23 | 0.01 | 0.07 | 0.008 | 0.0003 | - | - | - | - | Example |
| 14 | 0.012 | 0.37 | 0.18 | 0.022 | 0.008 | 17.4 | 0.22 | 0.33 | 0.29 | 0.02 | 0.05 | 0.013 | 0.0004 | - | - | - | - | |
| 15 | 0.005 | 0.39 | 0.16 | 0.021 | 0.009 | 17.8 | 0.20 | 0.43 | 0.19 | 0.01 | 0.11 | 0.007 | 0.0002 | - | - | - | - | |
| 16 | 0.005 | 0.55 | 0.24 | 0.020 | 0.005 | 18.3 | 0.19 | 0.35 | 0.25 | 0.02 | 0.04 | 0.005 | 0.0002 | - | - | - | - | |
| 17 | 0.010 | 0.49 | 0.20 | 0.017 | 0.006 | 18.6 | 0.22 | 0.31 | 0.35 | 0.02 | 0.11 | 0.013 | 0.0001 | 0.23 | - | - | 0.2 | |
| 18 | 0.004 | 0.39 | 0.15 | 0.025 | 0.008 | 18.2 | 0.22 | 0.32 | 0.33 | 0.03 | 1.15 | 0.006 | 0.0003 | - | 0.15 | 0.11 | - | |
| 19 | 0.008 | 0.41 | 0.18 | 0.022 | 0.006 | 18.3 | 0.20 | 0.35 | 0.25 | 0.02 | 0.35 | 0.009 | 0.0005 | - | - | - | - | Comparative Example |
| 20 | 0.004 | 0.42 | 0.23 | 0.028 | 0.001 | 19.7 | 0.24 | 0.30 | 0.35 . | 0.02 | 0.15 | 0.007 | 0.0002 | - | - | - | - | |
| 21 | 0.011 | 0.10 | 0.21 | 0.020 | 0.003 | 17.9 | 0.21 | 0.36 | 0.33 | 0.004 | 0.08 | 0.013 | 0.0001 | - | - | - | - | |
| 22 | 0.005 | 0.22 | 0.24 | 0.018 | 0.003 | 18.3 | 0.16 | 0.33 | 0.29 | 0.01 | 0.09 | 0.008 | 0.0008 | 0.20 | - | - | 0.2 | |

| | | | | | | | | | | | | | | | | | | |
|---|---|---|---|---|---|---|---|---|---|---|---|---|---|---|---|---|---|---|
| Notation: Underlined value is out of range according to the present invention. | | | | | | | | | | | | | | | | | | |

Using these cold-rolled, annealed and pickled sheets, corrosion resistance was evaluated by performing a CCT.

Subsequently, these cold-rolled, annealed and pickled sheets were polished to #600 finish and used for corrosion resistance evaluation, a corrosion resistance test on a weld zone and a corrosion resistance test on the weld zone of steels of different grades with SUS304.

The results obtained as described above are given in Table 4.

**[Table 4]**

| No. | Surface Quality of Cold-Rolled, Annealed and Pickled Sheet | Corrosion Resistance by CCT of Cold-Rolled, Annealed and Pickled Sheet | Corrosion Resistance by CCT of Sheet Polished to #600 Finish | Corrosion Resistance by CCT of Weld Zone of Steels of Same Grade | Corrosion Resistance by CCT of Weld Zone of Steels of Different Grades | Others | Note |
|---|---|---|---|---|---|---|---|
| 13 | ⊙ | ⊙ | ⊙ | ⊙ | ⊙ | - | Example |
| 14 | ○ | ⊙ | ⊙ | ⊙ | ⊙ | - | |
| 15 | ⊙ | ⊙ | ⊙ | ⊙ | ⊙ | - | |
| 16 | ⊙ | ⊙ | ⊙ | ⊙ | ⊙ | - | |
| 17 | ○ | ⊙ | ⊙ | ⊙ | ⊙ | - | |
| 18 | ⊙ | ⊙ | ⊙ | ⊙ | ⊙ | - | |
| 19 | ⊙ | ⊙ | ⊙ | ⊙ | × | - | Comparative Example |
| 20 | ⊙ | ⊙ | ⊙ | ⊙ | × | - | |
| 21 | × | ⊙ | ⊙ | ⊙ | Δ | - | |
| 22 | × | ○ | ○ | ○ | ○ | - | |

Here, the judging criteria of the tests given in Table 4 will be described hereafter.
(1) Surface appearance after cold rolling, pickling and annealing had been performed: judging on the basis of the ratio of the length of a portion in which surface defects were found to the total length of the sample, ⊙ represents the case where a defect ratio is less than 5% (satisfactory:
   very good), ○ represents the case where a defect ratio is 5% or more and less than 10% (satisfactory: good), Δ represents the case where a defect ratio is 10% or more and less than 20% (unsatisfactory) and × represents the case where a defect ratio is 20% or more (unsatisfactory: very bad).
(2) The results of the CCT on cold-rolled, annealed and pickled sheets and the sheets polished to #600 finish:
   judging on the basis of an area in which rust occurred after 15 cycles of the test, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).
(3) The results of the test of the corrosion resistance on the weld zone of steels of the same grade: judging on the basis of a rust area ratio after 15 cycles of the CCT which was performed on the samples obtained by performing TIG butt welding on steels of the same grade and by eliminating the temper color of the weld zone with #600 emery paper, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad)
(4) The results of the test of the corrosion resistance on the weld zone of steels of different grades with SUS304:
   judging on the basis of a rust area ratio after 15 cycles of the CCT which was performed on the samples obtained by performing TIG butt welding on each sample material and
   SUS304 and by eliminating the temper color of the weld zone with #600 emery paper, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).

The steels having chemical compositions No. 13 to No. 18 which were within the range according to the present invention were excellent in terms of corrosion resistance and surface quality in the cold-rolled, annealed and pickled sheet state, in the polished sheet state, in the weld zone of steels of the same grade and in the weld zone of the steels of different grades with SUS304. On the other hand, comparative example No. 19 which had a Mo content of 0.35% which was larger than the range according to the present invention had a large rust area in the weld zone of steels of different grades, which means that No. 19 was poor in terms of corrosion resistance.

In addition, comparative example No. 20 which had a large Cr content of 19.7% had a large rust area in the weld zone of steels of different grades, which means that No. 20 was poor in terms of corrosion resistance. It is thought to be because a martensite phase was not formed in the weld zone of steels of different grades due to the high content of Cr which is a ferrite former element.

In addition, comparative example No. 21 which had Si content which was less than the range according to the present invention and comparative example No. 22 which had small Si content and large Mg content were poor in terms of surface quality.

### [EXAMPLE 3]

Steels having chemical compositions of examples No. 23 through No. 28, No. 33 and comparative examples No. 29 through No. 32 given in Table 5 were smelted using a small vacuum melting furnace having a capacity of 50 kg. These ingots were heated at a temperature of 1150°C in a furnace under an Ar gas purge and hot-rolled into hot-rolled sheets having a thickness of 3.5 mm.

Then, these hot-rolled sheets were subjected to annealing of a hot-rolled sheet in air at a temperature of 950°C for a duration of 1 minute, a surface treatment using shot blasting with glass beads, and descaling by pickling in which the steel sheets were dipped in a sulfuric acid solution containing sulfuric acid at a concentration of 20 mass% at a temperature of 80°C for a duration of 120 seconds and then in a mixed acid solution containing nitric acid at a concentration of 15 mass% and hydrofluoric acid at a concentration of 3 mass% at a temperature of 55°C for a duration of 60 seconds.

Moreover, the hot-rolled sheets were cold-rolled into cold-rolled steel sheets having a thickness of 1.0 mm, subjected to annealing in a reducing atmosphere (H₂: 5 volume%, N₂: 95 volume%, dewpoint: -40°C) at a temperature of 900°C for a duration of 1 minute in order to obtain cold-rolled and annealed sheets. These cold-rolled and annealed sheets were subjected to descaling using electrolysis (10 Ampere /dm² for 2 seconds) two times in a solution containing nitric acid at a concentration of 15 mass% and hydrochloric acid in an concentration of 0.5 mass% at a temperature of 50°C in order to obtain cold-rolled, annealed and pickled sheets.

**[Table 5]**

| No. | Chemical Composition (mass%) | | | | | | | | | | | | | | | | | Note |
|---|---|---|---|---|---|---|---|---|---|---|---|---|---|---|---|---|---|---|
| | C | Si | Mn | P | S | Cr | Ni | Cu | Ti | Nb | Mo | N | Mg | Al | Sb | Zr | V | |
| 23 | 0.010 | 0.37 | 0.32 | 0.026 | 0.005 | 18.6 | 0.17 | 0.32 | 0.28 | 0.02 | 0.12 | 0.012 | 0.0004 | - | - | - | - | |
| 24 | 0.005 | 0.48 | 0.22 | 0.0227 | 0.006 | 17.4 | 0.15 | 0.36 | 0.24 | 0.01 | 0.08 | 0.005 | 0.0002 | - | - | - | - | |
| 25 | 0.011 | 0.36 | 0.18 | 0.024 | 0.003 | 18.9 | 0.22 | 0.41 | 0.32 | 0.03 | 0.15 | 0.011 | 0.0003 | 0.18 | - | - | - | |
| 26 | 0.009 | 0.54 | 0.22 | 0.022 | 0.004 | 17.2 | 0.21 | 0.32 | 0.21 | 0.02 | 0.18 | 0.010 | 0.0002 | - | 0.21 | 0.1 | - | Example |
| 27 | 0.007 | 0.33 | 0.18 | 0.026 | 0.003 | 18.4 | 0.19 | 0.36 | 0.36 | 0.03 | 0.08 | 0.006 | 0.0002 | 0.18 | - | - | 0.4 | |
| 28 | 0.009 | 0.45 | 0.24 | 0.027 | 0.002 | 18.0 | 0.24 | 0.36 | 0.19 | 0.01 | 0.05 | 0.005 | 0.0002 | 0.18 | 0.07 | - | 0.1 | |
| 33 | 0.010 | 0.45 | 0.18 | 0.025 | 0.003 | 18.2 | 0.18 | 0.41 | 0.23 | 0.02 | 0.05 | 0.009 | 0.0002 | 0.04 | - | - | - | |
| 29 | 0.008 | 0.33 | 0.21 | 0.026 | 0.007 | 16.8 | 0.16 | 0.42 | 0.28 | 0.02 | 0.11 | 0.009 | 0.0004 | - | - | - | - | Comparative Example |
| 30 | 0.004 | 0.42 | 0.23 | 0.028 | 0.001 | 19.8 | 0.24 | 0.30 | 0.35 | 0.02 | 0.15 | 0.007 | 0.0002 | 0.20 | - | - | - | |
| 31 | 0.011 | 0.15 | 0.22 | 0.021 | 0.002 | 17.9 | 0.22 | 0.34 | 0.08 | 0.02 | 0.40 | 0.012 | 0.0003 | - | - | - | - | |
| 32 | 0.005 | 0.25 | 0.24 | 0.018 | 0.003 | 18.3 | 0.16 | 0.33 | 0.29 | 0.10 | 0.09 | 0.008 | 0.0002 | - | - | - | 0.3 | |

| | | | | | | | | | | | | | | | | | | |
|---|---|---|---|---|---|---|---|---|---|---|---|---|---|---|---|---|---|---|
| Notation: Underlined value is out of range according to the present invention. | | | | | | | | | | | | | | | | | | |

Using these cold-rolled, annealed and pickled sheets, corrosion resistance was evaluated by performing a CCT. Moreover, these cold-rolled, annealed and pickled sheets were polished to #600 finish and used for corrosion resistance evaluation by performing a CCT and a corrosion test on the weld zone of steels of the same grade formed by performing TIG welding. In this test, two pieces of sheets which were cut out of each sample material were welded by performing TIG welding, and the surface of the welded material was polished to #600 finish in order to investigate corrosion resistance by performing a CCT. The conditions of TIG welding will be described below. Welding current was controlled so that the width of the back bead was 3 mm or more. The surface on the back bead side was evaluated.

Welding potential: 10 Volts
Welding current: from 90 Ampere to 110 Ampere
Welding speed: 600 mm/min
Electrode: tungsten electrode of 1.6 mm
Shield gas: face bead side Ar + 20 vol%N₂ 20 Liter/min, back bead side Ar + 20 vol%N₂ 20 Liter /min

Moreover, using the same sample materials, a corrosion test on the weld zone of steels of different grades with SUS304 was carried out. In this test, a piece of sheet which was cut out of each sample material was welded with a sheet of SUS304 having a thickness of 1.0 mm by performing TIG welding, and the surface of the welded material was polished to #600 finish in order to investigate corrosion resistance by performing a CCT. The conditions of TIG welding were almost the same as those used for steels of the same grade described above. In the salt spray cyclic corrosion test, a cycle in which spraying 5% NaCl aqueous solution at 35°C, 2 hrs, →drying at 60°C, 4 hrs, relative humidity: 20% to 30%, and →wetting at 40°C, 2 hrs, relative humidity: 95% or more were performed in this order was repeated for 15 cycles. The obtained results are given in Table 6.

**[Table 6]**

| No. | Surface Quality of Cold-Rolled, Annealed and Pickled Sheet | Corrosion Resistance by CCT of Cold-Rolled, Annealed and Pickled Sheet | Corrosion Resistance by CCT of Sheet Polished to #600 Finish | Corrosion Resistance by CCT of Weld Zone of Steels of Same Grade | Corrosion Resistance by CCT of Weld Zone of Steels of Different Grades | Others | Note |
|---|---|---|---|---|---|---|---|
| 23 | ⊙ | ⊙ | ⊙ | ○ | ○ | - | Example |
| 24 | ⊙ | ⊙ | ⊙ | ○ | ○ | - | |
| 25 | ⊙ | ⊙ | ⊙ | ⊙ | ⊙ | - | |
| 26 | ○ | ○ | ⊙ | ⊙ | ⊙ | - | |
| 27 | ⊙ | ⊙ | ⊙ | ⊙ | ⊙ | - | |
| 28 | ⊙ | ⊙ | ⊙ | ⊙ | ⊙ | - | |
| 33 | ⊙ | ⊙ | ⊙ | ⊙ | ⊙ | - | |
| 29 | ⊙ | × | × | × | × | - | Comparative Example |
| 30 | ⊙ | ⊙ | ○ | Δ | × | - | |
| 31 | Δ | ○ | ○ | ○ | × | - | |
| 32 | × | × | ⊙ | ○ | × | Residual Scale, Decreased Ductility | |

Here, the judging criteria of the tests given in Table 6 will be described hereafter.
(1) Surface appearance after cold rolling, pickling and annealing had been performed: judging on the basis of the ratio of the length of a portion in which surface defects were found to the total length of the sample, ⊙ represents the case where a defect ratio is less than 5% (satisfactory:
   very good), ○ represents the case where a defect ratio is 5% or more and less than 10% (satisfactory: good), Δ represents the case where a defect ratio is 10% or more and less than 20% (unsatisfactory) and × represents the case where a defect ratio is 20% or more (unsatisfactory: very bad).
(2) The results of the CCT on cold-rolled, annealed and pickled sheets and the sheets polished to #600 finish:
   judging on the basis of an area in which rust occurred after 15 cycles of the test, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).
(3) The results of the test of the corrosion resistance on the weld zone of steels of the same grade: judging on the basis of a rust area ratio after 15 cycles of the CCT which was performed on the samples obtained by performing TIG butt welding on steels of the same grade and by eliminating the temper color of the weld zone with #600 emery paper, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).
(4) The results of the test of the corrosion resistance on the weld zone of steels of different grades with SUS304:
   judging on the basis of a rust area ratio after 15 cycles of the CCT which was performed on the samples obtained by performing TIG butt welding on each sample material and
   SUS304 and by eliminating the temper color of the weld zone with #600 emery paper, ⊙ represents the case where a rust area ratio is less than 10% (satisfactory: very good), ○ represents the case where a rust area ratio is 10% or more and less than 20% (satisfactory: good), Δ represents the case where a rust area ratio is 20% or more and less than 30% (unsatisfactory) and × represents the case where a rust area ratio is 30% or more (unsatisfactory: very bad).

The steels having chemical compositions No. 23 to No. 28 and No. 33 which were within the range according to the present invention were excellent in terms of corrosion resistance and surface quality in the cold-rolled, annealed and pickled sheet state, in the polished sheet state, in the weld zone of steels of the same grade even in the case of an insufficient gas shield and in the weld zone of the steels of different grades with SUS304 even in the case of an insufficient gas shield. In particular, No. 25 through No. 28 and No. 33, to which Al, Sb, Zr and V were added, were excellent in terms of corrosion resistance in the weld zone of steels of different grades with SUS304 even in the case of an insufficient gas shield.

On the other hand, comparative example No. 29 which had a small Cr content of 16.8% had a large rust area, which means that No. 29 was poor in terms of corrosion resistance.

In addition, comparative example No. 30 which had a large Cr content of 19.8% had a large rust area in the weld zone of steels of different grades, which means that No. 30 was poor in terms of corrosion resistance. It is thought to be because a martensite phase was not formed in the weld zone of steels of different grades due to the high content of Cr which is a ferrite former element.

In addition, comparative example No. 31 which had a small Si content of 0.15% and a large Mo content of 0.4% was poor in terms of surface quality and, in particular, in terms of corrosion resistance and surface quality in the weld zone of steels of the same grade in the case of an insufficient gas shield and in the weld zone of steels of different grades with SUS304 in the case of an insufficient gas shield.

Moreover, in the case of comparative example No. 32 which had a small Si content of 0.25% and a Nb content of 0.10% which was larger than the range according to the present invention, residual scale was found after rapid annealing had been performed in a line for carbon steel, which means that the base metal (after cold rolling, annealing and pickling had been performed) of No. 32 was poor in terms of corrosion resistance.

As described above, it has been clarified that, according to the present invention, a ferritic stainless steel with excellent corrosion resistance of base metal, corrosion resistance in the weld zone of steels of the same grade, corrosion resistance in the weld zone of steels of different grades with SUS304 and with excellent surface quality of a cold-rolled, annealed and pickled sheet can be obtained without grinding the surface of a hot-rolled, annealed and pickled steel sheet.

### [Industrial Applicability]

The present invention can be suitably used as a material for parts, of which corrosion resistance is required, such as house wares, kitchen instrument, architectural interior and exterior, metal fittings in architecture, the interior of an elevator and an escalator, electric appliances, and automobile components.

## Claims

1. Ferritic stainless steel having a chemical composition consisting of, by mass%, C: 0.003% or more and 0.012% or less, Si: 0.30% or more and 0.60% or less, Mn: 0.10% or more and 0.35% or less, P: 0.040% or less, S: 0.020% or less, Cr: 17.0% or more and 19.0% or less, Ni: more than 0.10% and 0.30% or less, Ti: 0.20 % or more and 0.40% or less, Nb: 0.005% or more and less than 0.050%, Mo: 0.20% or less, N: 0.005% or more and 0.015% or less, Cu: 0.3% or more and 0.5% or less, Mg: less than 0.0005%, optionally further Al: 0.01% or more and 0.5% or less, Sb: 0.05% or more and 0.30% or less, Zr: 0.01% or more and 0.60% or less, V: 0.01% or more and 0.50% or less, and the balance being Fe and inevitable impurities.

## Patentansprüche

1. Ferritischer rostfreier Stahl mit einer chemischen Zusammensetzung bestehend aus, in Massenprozent,
C: 0,003 % oder mehr und 0,012 % oder weniger, Si: 0,30 % oder mehr und 0,60 % oder weniger, Mn: 0,10 % oder mehr und 0,35 % oder weniger, P: 0,040 % oder weniger, S: 0,020 % oder weniger, Cr: 17,0 % oder mehr und 19,0 % oder weniger, Ni: mehr als 0,10 % und 0,30 % oder weniger, Ti: 0,20 % oder mehr und 0,40 % oder weniger, Nb: 0,005 % oder mehr und weniger als 0,050 %, Mo: 0,20 % oder weniger, N: 0,005 % oder mehr und 0,015 % oder weniger, Cu: 0,3 % oder mehr und 0,5 % oder weniger, Mg: weniger als 0,0005 %,
optional ferner mit Al: 0,01 % oder mehr und 0,5 % oder weniger, Sb: 0,05 % oder mehr und 0,30 % oder weniger, Zr: 0,01 % oder mehr und 0,60 % oder weniger, V: 0,01 % oder mehr und 0,50 % oder weniger,
und der Rest sind Fe und unvermeidbare Verunreinigungen.

## Revendications

1. Acier inoxydable ferritique, présentant une composition chimique consistant, en pourcentage de masse, en : C : 0,003 % ou plus et 0,012 % ou moins, Si : 0,30 % ou plus et 0,60 % ou moins, Mn : 0,10 % ou plus et 0,35 % ou moins, P : 0,040 % ou moins, S : 0,020 % ou moins, Cr : 17,0 % ou plus et 19,0 % ou moins, Ni : plus de 0,10 % et 0,30 % ou moins, TI : 0,20 % ou plus et 0,40 % ou moins, Nb : 0,005 % ou plus et moins de 0,050 %, Mo :0,20 ou moins, N : 0,005 % ou plus et 0,015 % ou moins, Cu : 0,3 % ou plus et 0,5 % ou moins, Mg : moins de 0,0005 %, en option en outre Al : 0,01 % ou plus et 0,5 % ou moins, Sb : 0,05 % ou plus et 0,30 % ou moins, Zr : 0,01 % ou plus et 0,60 % ou moins, V : 0,01 % ou plus et 0,50 % ou moins, le reste étant constitué de Fe et d'impuretés inévitables.
